# EUROPÄISCHE PATENTSCHRIFT

(11) **EP 0 319 748 B1**
(45) Veröffentlichungstag und Bekanntmachung des Hinweises auf die Patenterteilung: **10.05.1995**
(21) Anmeldenummer: 88119057.3
(22) Anmeldetag: 17.11.1988
(51) Int. Cl.: B23B 51/04

(54) **Feinbohrwerkzeug**
Precision drill
Foret de precision

(30) Priorität: 17.12.1987 DE 3742740; 07.12.1987 DE 3741332
(43) Veröffentlichungstag der Anmeldung: 14.06.1989
(73) Patentinhaber: MAPAL Fabrik für Präzisionswerkzeuge Dr. Kress KG, D-73405 Aalen (DE)
(72) Erfinder:
(74) Vertreter: Gleiss, Alf-Olav, Dipl.-Ing.

(56) Entgegenhaltungen:
- CH-A- 588 323
- DE-A- 3 600 077
- FR-A- 2 167 452
- US-A- 2 967 442

## Beschreibung

Die Erfindung betrifft ein Feinbohrwerkzeug gemäß Oberbegriff des Anspruchs 1.

Es sind Feinbohrwerkzeuge zur Innenbearbeitung von Bohrungen bekannt, die mindestens eine von wenigstens einer Spannpratze gehaltene Messerplatte aufweisen. Nachteil dieser Feinbohrwerkzeuge ist es, daß die Spannpratze in den der Messerplatte zugeordneten Spanraum ragt, wodurch insbesondere bei Bohrungen mit kleinem Durchmesser die Spanabfuhr behindert wird. Durch nicht abgeführte Späne kann die Oberfläche der bearbeiteten Bohrung beschädigt, das Werkzeug durch Spanstauungen zerstört oder die Geometrie der Bohrung negativ beeinflußt werden.

In der EP 0146030 wurde ein Schneidwerkzeug zur spanabhebenden Metallbearbeitung vorgeschlagen, das einen Schneideinsatz mit einem im wesentlichen rechteckförmigen Querschnitt aufweist. Dieser Schneideinsatz wird in einer entsprechenden Ausnehmung im Werkzeug untergebracht und von einer auf einen Teilbereich des Schneideinsatzes wirkenden Spannpratze gehalten. Hierbei ist nachteilig, daß der Schneidkörper in einer bestimmten Lage fest eingespannt ist, dieser jedoch nicht zu einer verbesserten Spanabführung führt.

Es ist daher Aufgabe der Erfindung, ein Feinbohrwerkzeug zur Erzielung von Bohrungsoberflächen und -geometrien in Feinbearbeitungsqualität zu schaffen, bei dem eine optimale Spanabführung gewährleistet ist.

Diese Aufgabe wird bei einem Feinbohrwerkzeug der eingangs genannten Art mit Hilfe der in Anspruch 1 genannten Merkmale gelöst. Dadurch, daß die Messerplatte so verschwenkt ist, daß sie die genannte Ebene nur mit der Schneidkante berührt, die mit der zu bearbeitenden Oberfläche in Eingriff steht, und dadurch daß die Spannpratze so zurückspringt, daß die der Messerplatte abgewandte Oberseite, die gleichzeitig eine Begrenzungsfläche des Spanraums bildet, in der Ebene liegt und nicht in den Spanraum vorspringt, ergibt sich auch bei kleinen Bohrungsdurchmessern ein großer Spanraum. Durch die optimale Spanabführung ist gewährleistet, daß die mit Hilfe des Feinbohrwerkzeugs erzeugte Oberfläche und Geometrie der Bohrung nicht durch einen Spanstau beschädigt wird.

Besonders bevorzugt ist ein Ausführungsbeispiel des Feinbohrwerkzeugs, das der Bearbeitung des Bohrgrunds dient. Dazu ist die Messerplatte so an der Vorderseite des Werkzeugs angeordnet, daß die Schneidkante senkrecht zur Längsachse des Werkzeugs verläuft. Gerade bei dieser Konstellation ist der große Spanraum besonders vorteilhaft. Bei diesem Werkzeug ist die Messerplatte als Reibschneide ausgebildet sowie mittels eines Stellorgans radial einstellbar. Mit Hilfe dieses Werkzeugs läßt sich nicht nur der Bohrgrund optimal bearbeiten; auch die Bohrungswandung wird maßgenau bearbeitet. Die bearbeiteten Bohrungsoberflächen haben überdies Feinbearbeitungsqualität.

In bevorzugter Ausgestaltung des Feinbohrwerkzeuges ist weiterhin vorgesehen, daß die Messerplatte einen Querschnitt aufweist, der im wesentlichen aus zwei an jeder Grundseite zusammengesetzten Trapezen besteht. Hierdurch ist besonders vorteilhaft möglich, die Messerplatte im Grundkörper des Heimbauwerkzeuges anzuordnen und mit der Spannpratze in Eingriff zu bringen.

Weitere Vorteile und Ausgestaltungen der Erfindung ergeben sich aus den Unteransprüchen.

Die Erfindung wird im folgenden anhand der Figuren näher erläutert. Es zeigen:
Figur 1 eine Vorderansicht eines Feinbohrwerkzeugs mit einer Messerplatte, deren Schneidkante senkrecht zur Längsachse des Werkzeugs angeordnet ist;
Figur 2 eine Seitenansicht des Feinbohrwerkzeugs gemäß Figur 1;
Figur 3 einen Schnitt entlang der Linde III-III in Figur 2;
Figur 4 eine Seitenansicht eines Feinbohrwerkzeugs mit unter verschiedenen Winkeln zur Längsachse des Feinbohrwerkzeugs angeordneten Messerplatten;
Figur 5 eine Spannpratze von der Seite;
Figur 6 eine Spannpratze gemäß Figur 5 in perspektivischer Ansicht und
Figur 7 eine Spannpratze gemäß Figur 5 von oben.

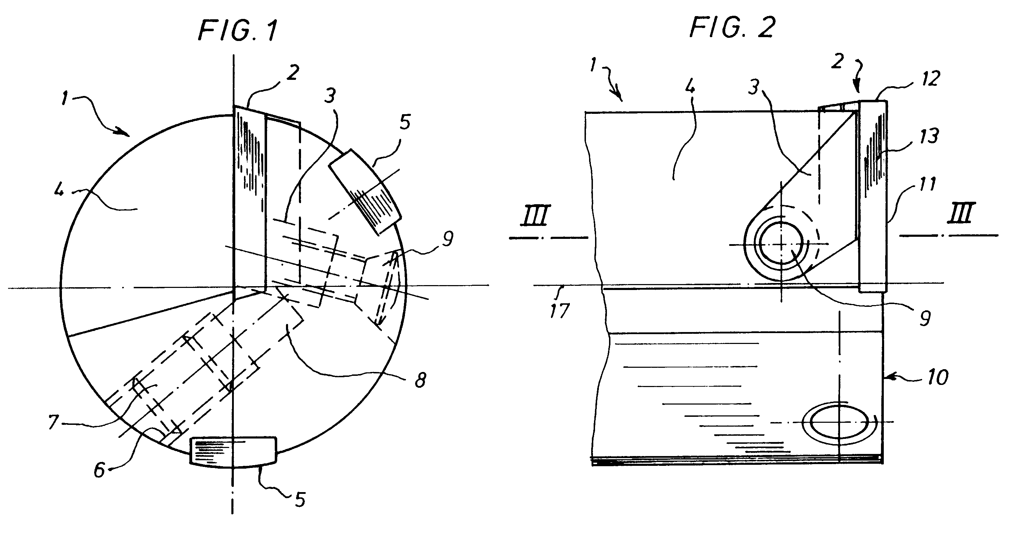

Figur 1 zeigt ein Drehwerkzeug, nämlich ein Feinbohrwerkzeug 1 in Vorderansicht. Es ist deutlich ersichtlich, daß die die Messerplatte 2 haltende Spannpratze 3 nicht in den Spanraum 4 ragt, der hier einen Öffnungswinkel von ca. 115° aufweist. Die Spannpratze 3 ist im Grundkörper des Feinbohrwerkzeugs versenkt angeordnet. Am Umfang des Feinbohrwerkzeugs sind Führungsleisten 5 erkennbar, wobei eine erste Leiste in Drehrichtung des Werkzeugs etwa 40° der Messerplatte nachgeordnet ist, während die zweite Leiste der Messerplatte gegenüberliegt. Durch eine in eine Bohrung 6 eingeführte Stellschraube 7 wird über einen Stellkeil 8 die Messerplatte 2 radial verstellt, wobei der Stellkeil 8 unmittelbar an der Messerplatte 2 anliegt. Die Spannpratze 3 wird von einer Spannschraube 9 gehalten, deren Kopf konisch ausgebildet ist und sich am Grundkörper des Feinbohrwerkzeugs abstützt. Es sind jedoch auch Spannschrauben anderer Ausführung verwendbar, beispielsweise solche, die zwei gegenläufige Gewindeabschnitte mit unterschiedlicher Steigung aufweisen. Die Messerplatte 2 ist in einem Messerschlitz bzw. in einer Nut untergebracht, die in den Grundkörper des Feinbohrwerkzeugs 1 beispielsweise eingefräst ist. Dadurch ergibt sich eine optimale Führung der Messerplatte, die zur Erzielung einer hohen Maßgenauigkeit und der Feinbearbeitungsqualität der bearbeiteten Oberflächen nötig ist.

Aus Figur 2 ist ersichtlich, daß die Messerplatte 2 neben einer im wesentlichen parallel zur Vorderseite 10 des Feinbohrwerkzeugs 1 verlaufenden Hauptschneide 11 eine Nebenschneide 12 aufweist, die sich zumindest über die Spanfläche 13 der Hauptschneide 11 erstreckt. Die Nebenschneide dient der maßgenauen Bearbeitung der Bohrungs-Seitenwände.

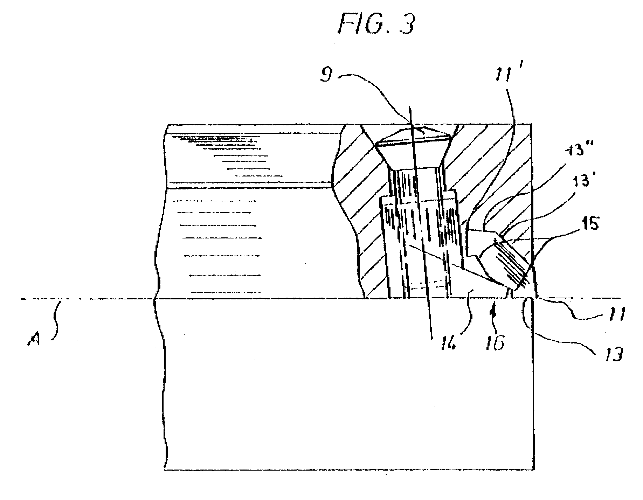

Aus der Schnittdarstellung in Figur 3 wird die Lage der Messerplatte 2, die vorzugsweise als Wendeplatte ausgebildet ist, besonders deutlich. Es ist auch ersichtlich, daß die der Spannlippe 14 der Spannpratze 3 zugewandte Seite der Messerplatte 2 zwei parallel zur Mittelachse des Messers verlaufende Spann-Nuten 15 aufweist. Diese Nuten sind so ausgebildet, daß die von der Spannlippe 14 ausgeübte Kraft in zwei Komponenten aufgespalten wird. Die eine Komponente wirkt in Richtung des Messerrückens, während die andere in Richtung des Freiwinkels der Schneidkante 11′ wirkt, die der Schneidkante 11 gegenüberliegt. Dadurch wird die Messerplatte optimal gehalten und bei der radialen Einstellung besonders gut geführt. Die Messerplatte wird während der radialen Einstellung auch dadurch geführt, daß die Spannlippe 14 der Spannpratze 3 in die Spann-Nut 15 eingreift. Da die Spannpratze im Grundkörper des Feinbohrwerkzeugs versenkt angeordnet ist, kann sie sich auch bei seitlich auf die Spannlippe 14 wirkenden Kräften, wie sie z.B. bei der radialen Einstellung der Messerplatte 2 auftreten, nicht verdrehen bzw. verschwenken. Dies trägt ebenfalls zur Führung der Messserplatte bei deren radialer Einstellung bei.

In Figur 3 ist zu erkennen, daß die dem Spanraum 4 zugewandte Oberfläche 16 der Spannlippe 14 etwa in der Ebene A liegt, die durch die Schneidkante 11 der Messerplatte und durch die Längsachse 17 des Feinbohrwerkzeugs 1 verläuft. Auch hier ist zu sehen, daß der Verlauf der Späne im Spanraum 4 nicht durch die Spannpratze 3 gestört wird. Die besondere Anordnung der Spannpratze wird dadurch ermöglicht, daß die aktive Schneidkante 11 in der Ebene A liegt, die durch diese Schneidkante und durch die Längsachse 17 des Feinbohrwerkzeugs verläuft, während die der aktiven Schneidkante 11 gegenüberliegende Schneidkante 11′ der Messerplatte in einem Abstand zur Ebene A liegt.

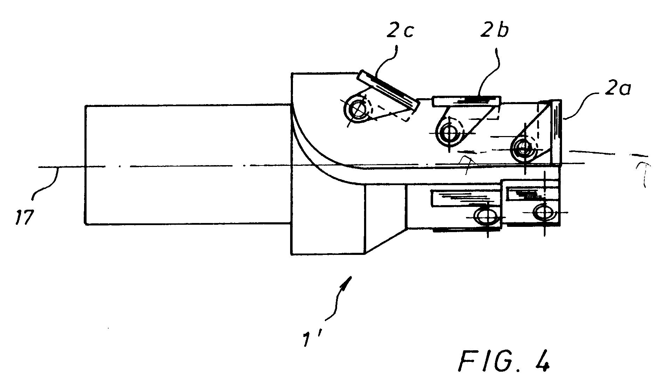

In Figur 4 ist ein Feinbohrwerkzeug 1′ mit mehreren Messerplatten dargestellt. Mit diesem Werkzeug kann also außer dem Bohrgrund die Bohrungswand bearbeitet werden, wobei auch konische Bohrungswände einer Feinbearbeitung unterzogen werden können. Bei dem in Figur 4 dargestellten Ausführungsbeispiel verläuft die Schnittkante einer ersten Messerplatte 2a senkrecht zur Längsachse 17 des Feinbohrwerkzeugs, während die Schnittkante einer zweiten Messerplatte 2b parallel zur Längsachse verläuft. Die Schnittkante einer dritten Messerplatte 2c verläuft unter einem Winkel von etwa 30° zur Längsachse 17 des Feinbohrwerkzeugs 1′. Der Winkel kann beliebig variiert werden.

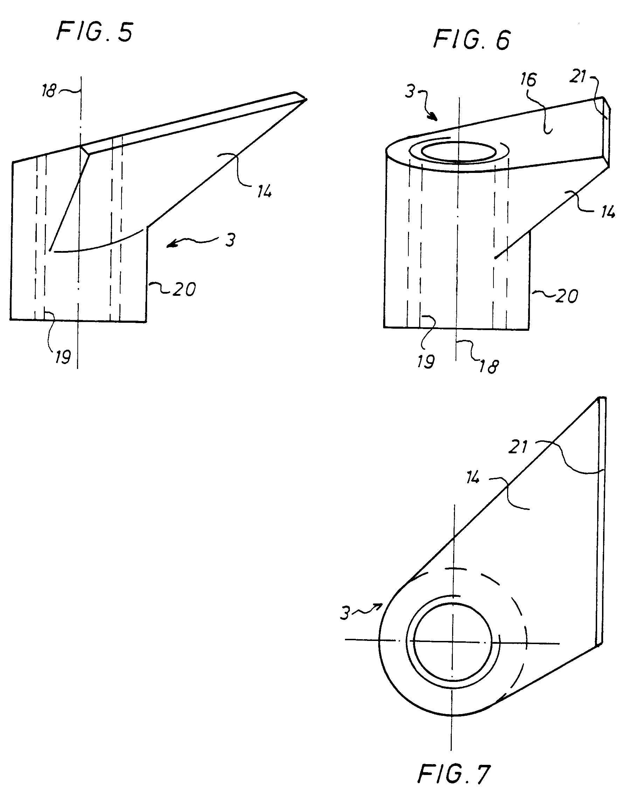

In den Figuren 5, 6 und 7 ist die Spannpratze 3 im Einzelnen dargestellt. Aus Figur 5 ist ersichtlich, daß die Oberfläche 16 der Spannlippe 14 in einem Winkel gegenüber der Mittelachse 18 der Bohrung 19 angeordnet ist. Im vorliegenden Fall ist ein Winkel von 10° dargestellt. Bei dieser Darstellung ist auch zu erkennen, daß die Spannpratze 3 einen Führungszapfen 20 aufweist, der in eine entsprechende Bohrung im Grundkörper des Feinbohrwerkzeugs 1, 1′ eingreift und zur besseren Lagerung der Spannpratze 3 im Grundkörper des Feinbohrwerkzeugs beiträgt.

Die perspektivische Darstellung in Figur 6 zeigt, daß die Oberfläche 16 der Spannlippe 14 einen Winkel von ca. 10° gegenüber der Mittelachse 18 der Bohrung 19 aufweist. Die Spannlippe 14 ist auf der Vorderseite mit einer Fase 21 versehen, die etwa in einem Winkel von 45° gegenüber der Oberfläche 16 verläuft.

Gemäß Figur 7 verbreitert sich die Spannlippe in Richtung auf ihre Vorderseite, wobei die Seitenkanten 22,23 der Spannlippe einen Winkel von 10° einschließen. Die Vorkante der Spannlippe ist in Figur 7 etwa um 30° gegenüber der Senkrechten geneigt.

Die in den Figuren 5 bis 6 dargestellte Spannpratze ist besonders für die Einspannung von an der Stirnseite des Feinbohrwerkzeugs angeordneten Messerplatten geeignet. Wie in Figur 2 dargestellt, ist die Messerplatte als Reibschneide ausgebildet, das heißt, sie weist eine am Radius des Feinbohrwerkzeugs angeordnete Nebenschneide 12 auf, die annähernd parallel zur bearbeiteten Oberfläche verläuft. Die Schneidkante der Nebenschneide weist eine von der Vorderseite des Feinbearbeitungswerkzeugs zu dessen Schaft hin abfallende Neigung auf. Die maximale Neigung beträgt etwa 1 um auf 1 mm. Der Verschleiß der Nebenschneide wird dadurch ausgeglichen, daß die Messerplatte mit Hilfe der Stellschraube 7 und des Stellkeils 8 radial verstellt wird. Um der Messerplatte einen besseren Halt zu gewähren, ist die Spannlippe 14 der Spannpratze 3 gemäß Figur 5 so geneigt, daß die Messerplatte auch gegen den Stellkeil 8 gepreßt wird. Die Verbreiterung der Spannlippe 14 dient insbesondere dazu, die Messerplatte 2 so zu halten, daß während der radialen Einstellung eine Schwenkbewegung, durch die der Neigungswinkel der Nebenschneide 12 verstellt würde, ausgeschlossen ist. Auch die Spann-Nut 15 und der Messerschlitz tragen dazu bei, daß die Messerplatte besser gehalten und geführt wird. Schließlich wird auch dadurch, daß die Spannpratze 3 durch ihre versenkte Anordnung im Grundkörper des Feinbohrwerkzeugs gegen Verdrehen gesichert ist, verhindert, daß sich der Neigungswinkel der Nebenschneide 12 bei der radialen Einstellung der Messerplatte 2 verändert. Dies führt zu einer hohen Maßgenauigkeit und zu einer hervorragenden Oberflächengüte bei der bearbeiteten Bohrung.

Die Spann-Nut 15 ist so ausgebildet, daß die durch die Spannlippe 14 auf die Messerplatte 2 ausgeübte Spannkraft aufgespalten wird. Dabei ergeben sich zwei ineinander übergehende Anpreßflächen:

Die Messerplatte 2 wird zum einen mit ihrem Rücken 13′, zum anderen mit der Freifläche 13˝ der Schneidkante 11′ gegen den Grundkörper des Feinbohrwerkzeugs gedrückt. Dadurch wird die Messerplatte besser in dem Feinbohrwerkzeug gehalten.

Insbesondere aus Figur 3 ist ersichtlich, daß das Feinbohrwerkzeug auch für die Innenbearbeitung von Bohrungen mit kleinem Durchmesser geeignet ist, weil die Messerplatte sehr flach ausgebildet ist. Dadurch ergibt sich ein großer Spanraum.

Die Messerplatte ist als Wendeplatte ausgebildet, so daß nach Abnutzung der Schneidkante 11 die Schneidkante 11′ nach einer Drehung der Messerplatte in Eingriff mit der Bohrungswandung bzw. mit dem Bohrungsgrund gebracht werden kann.

## Patentansprüche

1. Feinbohrwerkzeug zur Innenbearbeitung von Bohrungen mit mindestens einer von wenigstens einer in den Grundkörper des Werkzeugs (1) versenkt angeordneten Spannpratze (3) gehaltenen Schneidkörper **dadurch gekennzeichnet**, daß der Schneidkörper als Messerplatte (2) ausgebildet ist, daß die Messerplatte (2) gegenüber der durch die Schneidkante (11) der Messerplatte (2) und durch die Längsachse des Feinbohrwerkzeugs (1) verlaufenden Ebene (A) verschwenkt und so in einer an den Grundkörper des Feinbohrwerkzeugs eingebrachten Nut angeordnet ist, daß sie diese Ebene (A) nur mit ihrer aktiven Schneidkante (11) berührt, und daß die der Messerplatte (2) abgewandte Oberfläche (16) der Spannpratze (3) etwa in der Ebene (A) liegt und eine Begrenzungsfläche des Spanraumes (4) bildet.

2. Feinbohrwerkzeug nach Anspruch 1, **dadurch gekennziechnet,** daß die Schneidkante (11) der Messerplatte (2b) parallel zur Längsachse (17) des Feinbohrwerkzeugs (1′) angeordnet ist.

3. Feinbohrwerkzeug nach Anspruch 1, **dadurch gekennzeichnet,** daß die Schneidkante (11) der Messerplatte (2,2a) senkrecht zur Längsachse (17) des Feinbohrwerkzeugs (1,1′) angeordnet ist.

4. Feinbohrwerkzeug nach Anspruch 3, **dadurch gekennzeichnet,** daß die sich auf der der Längsachse (17) des Feinbohrwerkzeugs (1) abgewandten Seite der Schneidkante (11) anschließende Seitenkante der als Reibschneide ausgebildeten Messerplatte (2) zumindest im Bereich der Spanfläche (13) der Schneidkante (11) als Nebenschneide (12) ausgebildet ist.

5. Feinbohrwerkzeug nach Anspruch 3, **dadurch gekennzeichnet,** daß die die Messerplatte (2) haltende Spannpratze (3) so ausgebildet ist, daß sie die Messerplatte (2) auch gegen ein Stellorgan (7,8) drückt, welches der radialen Einstellung der Messerplatte (2) dient.

6. Feinbohrwerkzeug nach Anspruch 5, **dadurch gekennzeichnet,** daß die Spannlippe (14) der Spannpratze (3) gegenüber der Ebene, die senkrecht auf der Mittelachse (18) der eine Spannschraube (9) aufnehmenden Bohrung (19) der Spannpratze steht, einen Winkel einschließt.

7. Feinbohrwerkzeug nach Anspruch 6, **dadurch gekennzeichnet,** daß sich die Spannlippe (14) in Richtung auf die Messerplatte (2) verbreitert.

8. Feinbohrwerkzeug nach Anspruch 1, **dadurch gekennzeichnet,** daß die Spannpratze (3) in den Grundkörper des Feinbohrwerkzeugs versenkt und gegen Verdrehen gesichert ist.

9. Feinbohrwerkzeug nach Anspruch 1, **dadurch gekennzeichnet,** daß die Messerplatte 2 einen Querschnitt aufweist, der im wesentlichen aus zwei an ihrer Grundseite zusammengesetzten Trapezen besteht.

10. Feinbohrwerkzeug nach Anspruch 9, **dadurch gekennzeichnet,** daß die Messerplatte (2) auf der der Spannlippe (14) zugewandten Seite eine sich an die Schneidkante (11) anschließende Spanfläche (13) und/oder zwei symmetrisch zur Mittelachse der Messerplatte angeordnete Spann-Nuten (15) aufweist.

## Claims

1. A precision drill for machining the interior of bores, with at least one cutting member retained by at least one clamping lug (3) which is sunk into the base body of the tool (1), **characterised in that** the cutting member is formed as a cutter plate (2) which is tilted in relation to the plane (A) extending through the cutting edge (11) of the cutter plate (2) and through the longitudinal axis of the precision drill (1), the said cutter plate being arranged in a groove in the body of the precision drill in such a way that it only makes contact with the said plane (A) via its active cutting edge (11), and the surface (16) of the clamping lug (3) remote from the cutter plate (2) is positioned substantially in the plane (A) and forms a surface delimiting the chip space (4).

2. A precision drill in accordance with claim 1, **characterised in that** the cutting edge (11) of the cutter plate (2b) is arranged parallel to the longitudinal axis (17) of the precision drill (1').

3. A precision drill in accordance with claim 1, **characterised in that** the cutting edge (11) of the cutter plate (2, 2a) is arranged to be perpendicular to the longitudinal axis (17) of the precision drill (1, 1').

4. A precision drill in accordance with claim 3, **characterised in that** the side edge of the cutter plate (2) formed as a friction cutter - the said edge being adjacent to that side of the cutting edge (11) remote from the longitudinal axis (17) of the precision drill (1) - is formed as a minor cutting edge (12), at least in the region of the face (13) of the cutting edge (11).

5. A precision drill in accordance with claim 3, **characterised in that** the clamping lug (3) retaining the cutter plate (2) is formed in such a way that it also urges the cutter plate (2) against a setting member (7, 8) for radial adjustment of the said cutter plate (2).

6. A precision drill in accordance with claim 5, **characterised in that** the clamping lip (14) of the clamping lug (3) encloses an angle with the plane which is perpendicular to the central axis (18) of a bore (19) in the clamping lug, intended to receive one clamping screw (9).

7. A precision drill in accordance with claim 6, **characterised in that** the clamping lip (14) widens in the direction of the cutter plate (2).

8. A precision drill in accordance with claim 1, **characterised in that** the clamping lug (3) is sunk into the body of the precision drill and is secured against twisting.

9. A precision drill in accordance with claim 1, **characterised in that** the cutter plate (2) has a cross-sectional shape substantially comprising two trapeziums joined at their bases.

10. A precision drill in accordance with claim 9, **characterised in that** on its side facing the clamping lip (14), the cutter plate (2) has a face (13) adjacent to the cutting edge (11) and/or two clamping grooves (15) arranged symmetrically with respect to the central axis of the cutter plate.

## Revendications

1. Outil de forage de précision pour l'usinage intérieur d'alésage avec au moins un corps de coupe maintenu par au moins une griffe de serrage (3) disposée de façon enfoncée dans le corps de base de l'outil (1), foret de précision caractérisé en ce que le corps de coupe est constitué sous la forme d'un bloc d'appui (2), en ce que le bloc d'appui (2) est incliné par rapport au plan (A) qui passe par l'arête de coupe (11) du bloc d'appui (2) et par l'axe longitudinal de l'outil de forage de précision (1) et est ainsi disposé dans une rainure pratiquée sur le corps de base de l'outil de forage de précision, en ce que ce bloc ne vient en contact avec ce plan (A) que par son arête de coupe active (11) et en ce que la surface (16), située à l'opposé du bloc d'appui (2), de la griffe de serrage (3) se trouve à peu près dans le plan (A) et constitue une surface de délimitation du logement des copeaux (4).

2. Outil de forage de précision selon la revendication 1, caractérisé en ce que l'arête de coupe (11) de la plaque d'appui (2b) est disposée parallèlement à l'axe longitudinal (17) de l'outil de forage de précision (1').

3. Outil de forage de précision selon la revendication 1, caractérisé en ce que l'arête de coupe (11) de la plaque d'appui (2, 2a) est disposée perpendiculairement à l'axe longitudinal (17) de l'outil de forage de précision (1, 1').

4. Outil de forage de précision selon la revendication 3, caractérisé en ce que le bord latéral, se raccordant au côté de l'arête de coupe (11) situé à l'opposé de l'axe longitudinal (17) de l'outil de forage de précision (1), du bloc d'appui (2) constituée sous la forme d'un tranchant à friction est constitué au moins dans la zone de la surface du copeau (13) de l'arête de coupe (11) en tant que tranchant auxiliaire (12).

5. Outil de forage de précision selon la revendication 3, caractérisé en ce que la griffe de serrage (3) qui maintient le bloc d'appui (2) est constituée de telle façon qu'elle presse le bloc d'appui (2) aussi contre un organe de réglage (7, 8), qui sert au réglage radial du bloc d'appui (2).

6. Outil de forage de précision selon la revendication 5, caractérisé en ce que la lèvre de serrage (14) de la griffe de serrage (3) forme un angle par rapport au plan qui se tient perpendiculairement à l'axe médian (18) de l'alésage (19), qui reçoit une vis de serrage (9), de la griffe de serrage.

7. Outil de forage de précision selon la revendication 6, caractérisé en ce que la lèvre de serrage (14) se déploie en direction du bloc d'appui (2).

8. Outil de forage de précision selon la revendication 1, caractérisé en ce que la griffe de serrage (3) s'enfonce dans le corps de base de l'outil de forage de précision, et est bloquée de façon à ne pas pouvoir tourner.

9. Outil de forage de précision selon la revendication 1, caractérisé en ce que le bloc d'appui (2) présente une section transversale qui consiste essentiellement en deux trapèzes réunis par leurs bases.

10. Outil de forage de précision selon la revendication 9, caractérisé en ce que le bloc d'appui (2) présente sur le côté qui est tourné vers la lèvre de serrage (14), une surface de copeau (13)qui se raccorde à l'arête de coupe (11) et/ou deux rainures de copeaux (15) disposées de façon symétrique par rapport à l'axe médian du bloc d'appui.
